(19) **Europäisches Patentamt**
**European Patent Office**
**Office européen des brevets**

(11) **EP 0 812 872 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**11.01.2012 Patentblatt 2012/02**

(45) Hinweis auf die Patenterteilung:
**05.09.2001 Patentblatt 2001/36**

(21) Anmeldenummer: **97109083.2**

(22) Anmeldetag: **05.06.1997**

(51) Int Cl.:
*C08J 3/16* *(2006.01)* *C04B 24/26* *(2006.01)*
*C04B 40/06* *(2006.01)*

(54) **Verfahren zur Herstellung von Polymerisatpulver**

Process for preparing polymer powders

Procédé pour préparer des poudres polymères

(84) Benannte Vertragsstaaten:
**AT DE ES FR GB IT SE**

(30) Priorität: **12.06.1996 DE 19623412**

(43) Veröffentlichungstag der Anmeldung:
**17.12.1997 Patentblatt 1997/51**

(73) Patentinhaber: **BASF SE**
**67056 Ludwigshafen (DE)**

(72) Erfinder:
  • **Pakusch, Joachim, Dr.**
  **67065 Ludwigshafen (DE)**
  • **Roser, Joachim, Dr.**
  **68165 Mannheim (DE)**
  • **Angel, Maximilian, Dr.**
  **67105 Schifferstadt (DE)**
  • **Dragon, Andree**
  **67346 Speyer (DE)**

(56) Entgegenhaltungen:
  **EP-A- 0 407 889     EP-A- 0 632 096**
  **EP-A1- 0 680 993    EP-A1- 0 698 586**
  **DE-A- 2 445 813     DE-A- 19 506 331**
  **DE-A1- 2 049 114**

  • **Dr. J. Schulze "Redispersionpulver in Zement" TIZ fachberichte, Bd.109, 1985, Seiten 698-703**
  • **EDWARD A. COLLINS, JAN BARES, FRED W.BILLMEYER, JR.: 'Experiments in polymer science', Mai 1973, WILEY-INTERSCIENCE, NEW YORK Seiten 222 - 223**
  • **'Polymer Handbook 1989', 1989, BRANDRUP AND IMMERGUT**
  • **Brochure Vinnapas - Dispersionspulver (Ausgabe 1/95) (firmenbrochure von Wacker)**
  • **'Enyclopedia of Polymer science and Technology, Bd. 15', 1971 Seite 698**

EP 0 812 872 B2

**Beschreibung**

Die vorliegende Erfindung betrifft ein neues Verfahren zur Herstellung von Polymerisatpulver durch Trocknung einer wäßrigen Polymerisatdisperison, deren Film (der Begriff Film meint in dieser Schrift die bei einer 10°C oberhalb der Mindestfilmbildtemperatur (DIN 53 787, 1974) jedoch nicht unterhalb 20°C durch Trocknen verfilmte wäßrige Polymerisatdispersion) eine Glasübergangstemperatur Tg ≤ 30°C aufweist, nach Zusatz von Trocknungshilfsmittel.

Ferner betrifft die vorliegende Erfindung die bei Anwendung des neuen Verfahrens resultierenden Polymerisatpulver sowie deren Verwendung zur Modifikation von mineralischen Bindebaustoffen.

Mineralische Bindebaustoffe sind allgemein bekannt. Es werden als solche Zubereitungen zusammengefaßt, die als wesentliche Bestandteile pulverförmige anorganische Bindemittel wie Kalk, Zement und/oder Gips sowie in der Regel als Zuschläge dienende Sande, Kiese, gebrochene Gesteine oder sonstige Füllstoffe wie z.B. natürliche oder synthetische Fasern enthalten und die durch Anrühren mit Wasser in ihre gebrauchsfertige Form (Mörtel bzw. Beton) überführt werden, wobei letztere beim sich selbst Überlassen, an der Luft oder teilweise auch unter Wasser, als Funktion der Zeit steinartig verfestigen.

Es ist ferner allgemein bekannt, daß mineralische Bindebaustoffe zur gezielten Steuerung ihres mechanischen Eigenschaftsprofils im steinartig verfestigten Zustand häufig in mit feinteiligen Polymerisaten (der Begriff Polymerisat soll hier solche hochmolekularen Verbindungen umfassen, die durch radikalische Polymerisation von wenigstens eine ethylenisch ungesättigte Gruppierung aufweisenden Ausgangsmonomeren erhältlich sind) modifizierter Form eingesetzt werden.

Die modifizierende Wirkung des feinteiligen Polymerisats ist dabei meist weniger eine Funktion von dessen chemischer Beschaffenheit, sondern wird häufig von dessen physikalischen Eigenschaften, insbesondere von dessen Glasübergangstemperatur, bestimmt.

Als modifizierende Polymerisate kommen daher Polymerisate unterschiedlichsten Monomerenaufbaus in Betracht, deren Glasübergangstemperatur Tg (unter den Begriff "Glasübergangstemperatur" wird in dieser Schrift die quasistatische Glasübergangstemperatur gemäß DIN 53 765 (differential scanning calorimetry, 20°C/min, midpoint) verstanden) in einem weiten Bereich, z.B. von -60 bis +180°C, variieren kann. Beispiele für die Modifikation von mineralischen Bindebaustoffen mit Polymerisaten umfassen z.B. die US-A 4 340 510, die GB-PS 1 505 558, die US-A 3 196 122, die US-A 3 043 790, die US-A 3 239 479, die DE-A 4 317 035, die DE-A 43 17 036, die DE-A 43 20 220, die EP-A 537 411, die DE-AS 16 69 903, die BE-A 84 54 499, die JP-A 54/43285, die US-A 4 225 496, die DE-A 32 20 384, die DE-A 28 37 898, die US-A 3 232 899 und die JP-A 91/131 533.

Üblicherweise erfolgt das Einbringen dieser feinteiligen modifizierenden Polymerisate in Gestalt ihrer wäßrigen Polymerisatdispersionen. Dies sind Systeme, die im wesentlichen kugelförmige Knäuel aus ineinander verschlungenen Polymerisatketten (sogenannte Polymerisatteilchen) in in wäßrigem Medium befindlicher disperser Verteilung enthalten. Der Durchmesser der Polymerisatteilchen liegt im allgemeinen hauptsächlich im Bereich von 0,01 bis 5 μm, häufig hauptsächlich im Bereich von 0,01 bis 1 μm. Die Vorzüge der vorgenannten Verfahrensweise liegen daher unter anderem darin begründet, daß die wäßrige Polymerisatdispersion einerseits die Polymerisate in besonders feinteiliger Form enthält und andererseits als Dispergiermedium das zum Anmachen sowieso benötige Wasser aufweist.

Nachteilig an der Applikationsform "wäßrige Polymerisatdispersion" ist jedoch, daß sie als Verkaufsform nicht voll zu befriedigen vermag. So impliziert ihr Transport zum Gebrauchsort neben dem Transport des modifizierenden Polymerisats stets den Transport des überall leicht verfügbaren (Anmach)wassers und andererseits kann sie dem mineralischen Bindebaustoff erst am Gebrauchsort zugesetzt werden, da dieser ansonsten vor Gebrauch aushärtet.

Die unter den vorgenannten Gesichtspunkten zweckmäßigste Applikationsform einer wäßrigen Polymerisatdispersion ist daher diejenige ihres bei Zusatz von Wasser redispergierbaren Polymerisats (vgl. z.B. DE-A 42 06 429). Gemeinsam mit den übrigen Mörtel-, Beton- oder Putzbestandteilen lassen sich daraus verkaufsgerechte, lagerfähige Trockenzubereitungen anfertigen, die zur Überführung in die gebrauchsfertige Form lediglich mit Wasser angerührt werden müssen.

Prinzipiell sind bei Zusatz von Wasser redispergierbare Polymerisate durch Trocknung ihrer wäßrigen Polymerisatdispersionen zugänglich, wobei sie normalerweise in Pulverform anfallen. Beispiele für solche Trocknungsverfahren sind die Gefriertrocknung und die Sprühtrocknung. Letztere Methode, bei der die Polymerisatdispersion in einem Warmluftstrom versprüht und entwässert wird, ist insbesondere zweckmäßig zur Erzeugung großer Pulvermengen. Vorzugsweise werden die Trockenluft und die versprühte Dispersion dabei im Gleichstrom durch den Trockner geführt (vgl. z.B. EP-A 262 326 oder EP-A 407 889).

Während die Trocknung von Polymerisatlösungen normalerweise vollständig reversibel ist, besteht ein Nachteil von durch Trocknung wäßriger Polymerisatdispersionen erzeugten Polymerisatpulvern darin, daß ihre Redispergierbarkeit bei Zusatz von Wasser in der Regel insofern nicht voll zu befriedigen vermag, als die bei der Redispergierung resultierenden Polymerisatteilchen üblicherweise nicht mehr die Feinteiligkeit der wäßrigen Ausgangsdispersion (Primärteilchendurchmesserverteilung) aufweisen, was ihre modifizierende Wirkung bei Zusatz zu mineralischen Bindebaustoffen mindert.

Dieser Sachverhalt rührt daher, daß wäßrige Polymerisatdispersionen im Unterschied zu Polymerisatlösungen keine thermodynamisch stabilen Systeme bilden. Vielmehr versucht das System, die Grenzfläche Polymerisat/Dispergiermedium durch Vereinigung von kleinen Primärteilchen zu größeren Sekundärteilchen (z.B. Stippen, Koagulat) zu verkleinern, was im Zustand der dispersen Verteilung im wäßrigen Medium durch Zusatz von Dispergiermitteln für längere Zeit verhindert werden kann.

Ganz allgemein ausgedrückt, handelt es sich bei Dispergiermitteln um solche Substanzen, die die Grenzfläche "dispergiertes Polymerisat/wäßriges Dispergiermedium" zu stabilisieren vermögen. Die stabilisierende Wirkung ist dabei in erster Linie auf eine sterische und/oder elektrostatische Abschirmung der dispergierten Polymerisatpartikel zurückzuführen, deren Einhüllende das Dispergiermittel bildet.

Im Rahmen der Trocknung wäßriger Polymerisatdispersionen reicht nun aber die Trennwirkung der Dispergiermittel häufig nicht mehr aus und es kommt in bestimmtem Umfang zu irreversibler Sekundärteilchenbildung. D.h., die Sekundärteilchen bleiben bei der Redispergierung als solche erhalten und mindern die modifizierende Wirkung der im Rahmen der Redispergierung erhältlichen wäßrigen Polymerisatdispersion. Dies gilt um so mehr, je niedriger die Glasübergangstemperatur des dispergierten Polymerisats ist.

Es ist nun seit längerem bekannt, daß es Stoffe gibt, deren Zusatz zu wäßrigen Polymerisatdisperionen das Erscheinungsbild irreversibler Sekundärteilchenbildung beim Trocknen reduziert.

Diese Stoffe werden unter dem Oberbegriff Trocknungshilfsmittel zusammengefaßt. Sie sind vielfach insbesondere als Sprühhilfsmittel bekannt, da die Sprühtrocknung in besonderem Ausmaß die Ausbildung irreversibler Sekundärteilchen promoviert. Gleichzeitig mindern sie in der Regel die Ausbildung von bei der Sprühtrocknung an der Trocknerwand haften bleibendem Polymerbelag und bewirken so eine Erhöhung der Pulverausbeute. Bezogen auf dispergiertes Polymerisat werden die Trocknungshilfsmittel normalerweise in Mengen von 1 bis 30 Gew.-%, häufig 1 bis 20 Gew.-%, zugesetzt.

Häufig sind geringe Zusatzmengen bevorzugt.

Gemäß TIZ-Fachberichte, Vol. 109, No. 9, 1985, S. 698 ff. handelt es sich bei den bisher eingesetzten Trocknungshilfsmitteln in der Regel um wasserlösliche Substanzen, die bei der Trocknung eine Matrix ausbilden, in die die wasserunlöslichen, von Dispergiermittel umgebenen Polymerisatprimärteilchen eingebettet werden. Die die Polymerisatprimärteilchen schützend umgebende Matrix wirkt einer irreversiblen Sekundärteilchenbildung entgegen. Es erfolgt so meist eine reversible Ausbildung von Sekundärteilchen (Agglomerate einer Größe von typisch 1 bis 250 $\mu$m), die zahlreiche, durch die Trocknungshilfsmittelmatrix voneinander getrennte, Polymerisatprimärteilchen umfassen. Beim Redispergieren mit Wasser löst sich die Matrix wieder auf und die ursprünglichen, von Dispergiermittel umgebenen, Polymerisatprimärteilchen werden im wesentlichen wieder erhalten. Den reversibel ausgebildeten Sekundärteilchen werden vielfach noch feinteilige Antiblockmittel wie feinteiliges Quarzpulver zugesetzt, die als Abstandhalter fungieren und z.B. ihrem Zusammenbacken beim Lagern unter der Druckwirkung ihres Eigengewichtes entgegenwirken, wobei dieser Antiblockmittelzusatz vor, während und/oder nach der Trocknung erfolgen kann.

Die DE-A 20 49 114 empfiehlt, wäßrigen Polymerisatdispersionen als Trocknungshilfsmittel Kondensationsprodukte aus Melaminsulfonsäure und Formaldehyd zuzusetzen. Die DE-A 24 45 813 und die EP-A 78 449 empfehlen wäßrigen Polymerisatdisperionen als Trocknungshilfsmittel Kondensationsprodukte aus Naphthalinsulfonsäure und Formaldehyd (insbesondere deren wasserlösliche Alkali- und/ oder Erdalkalisalze) zuzusetzen. Die EP-A 407 889 empfiehlt, wäßrigen Polymerisatdispersicnen als Trocknungshilfsmittel Kondensationsprodukte aus Phenolsulfonsäure und Formaldehyd (insbesondere deren wasserlösliche Alkali- und/oder Erdalkalisalze) zuzusetzen. Die DE-AS 22 38 903 und die EP-A 576 844 empfehlen die Verwendung von Poly-N-Vinylpyrrolidon als ein solches Trocknungshilfsmittel. Die EP-A 62 106 und die EP-A 601 518 empfehlen die Verwendung von Polyvinylalkohol als Trocknungshilfsmittel. Polyvinylalkohol wird auch von U. Rietz in Chemie und Technologie makromolekularer Stoff (FH-Texte FH Aachen) 53 (1987) 85 und in der EP-A 680 993 sowie in der EP-A 627 450 als Trocknungshilfsmittel empfohlen. In der DE-A 3 344 242 werden als Trocknungshilfsmittel Ligninsulfonate genannt.

Die DE-A 19 539 460, die EP-A 671 435 und die EP-A 629 650 offenbaren Homo- und Copolymerisate der 2-Acrylamido-2-methylpropansulfonsäure als geeignete Trocknungshilfsmittel für wäßrige Polymerisatdispersionen.

Die EP-A 467 103 betrifft die Herstellung von in wäßrigem Medium redispergierbaren Polymerisatpulvern durch Trocknung unter Zusatz von Copolymerisaten aus 50 bis 80 mol-% einer olefinisch ungesättigten Mono- und/oder Dicarbonsäure und 20 bis 50 mol-% eines $C_3$- bis $C_{12}$-Alkens und/oder Styrol als Trocknungshilfsmittel. Die DE-A 24 45 813 empfiehlt sulfongruppenhaltige Kondensationsprodukte aus ein- oder mehrkernigen aromatischen Kohlenwasserstoffen und Formaldehyd als Trocknungshilfsmittel. In der DE-A 44 06 822 werden Propfpolymere aus Polyalkylenoxiden und ungesättigten Mono-/Dicarbonsäuren bzw. deren Anhydriden nach erfolgter Derivatisierung mit primären/ sekundären Aminen oder Alkoholen als Trocknungshilfsmittel empfohlen. Die DE-A 33 44 242 und die EP-A 536 597 nennen Stärke und Stärkederivate als geeignete Trocknungshilfsmittel. In der DE-A 493 168 werden Organopolysiloxane als Trocknungshilfsmittel empfohlen. Die DE-A 33 42 242 nennt des weiteren Cellulosederivate als geeignete Trocknungshilfsmittel und die DE-A 41 18 007 empfiehlt Kondensationsprodukte aus sulfonierten Phenolen, Harnstoff, weiteren organischen Stickstoff-Basen und Formaldehyd als Trocknungshilfsmittel.

Während das Beisein von Trocknungshilfsmittel aufgrund der begrenzten Menge in der Regel nicht auf die mechanischen Eigenschaften des mit einem redispergierbaren Polymerisatpulver modifizierten verfestigten mineralischen Bindebaustoffs durchschlägt und somit im verfestigten mineralischen Bindebaustoff die modifizierende Wirkung des redispergierten Polymerisats normalerweise nicht beeinträchtigt, gilt diese Aussage nicht hinsichtlich des Fließverhaltens des mit Wasser gebrauchsfertig angemachten, mit einem redispergierbaren Polymerisatpulver modifizierten, mineralischen Bindebaustoffs (wohingegen sich das eigentliche modifizierende Polymerisat auf vorgenanntes Fließverfahren in typischer Weise weniger auswirkt).

Dies rührt unter anderem daher, daß die Trocknungshilfsmittel üblicherweise eine gewisse grenzflächenaktive Wirkung aufweisen, die z.B. die Benetzung der Zement- und Zuschlagpartikel im mineralischen Bindebaustoff durch das Anmachwasser und damit das Fließverhalten signifikant beeinflußt.

Eigene experimentelle Untersuchungen im Verein mit Literaturstudium haben nun ergeben, daß sich die Mannigfaltigkeit der bekannten Trocknungshilfsmittel im wesentlichen in zwei Gruppen unterteilen läßt, von denen das Beisein der Mitglieder der einen Gruppe die Fließgrenze des gebrauchsfertig angemachten, mit einem redispergierbaren Polymerisatpulver modifizierten, mineralischen Bindebaustoffs verringert (die Mitglieder dieser Gruppe werden nachfolgend als Verflüssiger bezeichnet), wohingegen ein entsprechendes Beisein der Mitglieder der anderen Gruppe diese Fließgrenze erhöhen (die Mitglieder dieser Gruppe werden nachfolgend als Verfestiger bezeichnet).

Als Fließgrenze wird hier diejenige Schubspannung bezeichnet, oberhalb derer sich ein Werkstoff wie eine Flüssigkeit verhält, d.h. fließt, während er sich bei Einwirkung von unterhalb der Fließgrenze liegenden Schubspannungen wie ein Feststoff verhält, d.h. nicht fließt.

In vielen Fällen ist es nun erwünscht, daß der gebrauchsfertig angemachte, mit einem redispergierbaren Polymerisatpulver modifizierte, mineralische Bindebaustoff eine möglichst niedrige Fließgrenze aufweist (wäre durch vermehrten Wasserzusatz immer erzielbar), ohne daß während seiner Verfestigung ein Separieren der Zuschläge erfolgt, so daß der verfestigte polymerisatmodifizierte mineralische Bindebaustoff einen möglichst homogenen Aufbau hat (ist bei Verflüssigung durch vermehrten Wasserzusatz nicht mehr gewährleistet). Beispiele für ein derartiges Anforderungsprofil sind selbstverlaufende Ausgleichsmassen auf der Basis polymerisatmodifizierter mineralischer Bindebaustoffe (sie werden auf Unebenheiten aufweisende Untergründe aufgebracht, um eine glatte Oberfläche zu erhalten und sollen unter der Einwirkung der insbesondere durch die Unebenheiten des Untergrundes verursachten Schubspannungen wie eine Flüssigkeit verlaufen, so daß sich von selbst ein gleichmäßiges Niveau einstellt) oder polymerisatmodifizierter mineralischer Mörtel, der aus Gründen der Zweckmäßigkeit pumpfähig sein soll. In diesen Fällen wird man der wäßrigen Polymerisatdispersion als Trocknungshilfsmittel zur Herstellung des modifizierenden redispergierbaren Polymerisatpulvers selbstredend ein verflüssigend wirkendes Trocknungshilfsmittel zusetzen.

In anderen Fällen ist es erwünscht, daß der gebrauchsfertig angemachte polymerisatmodifizierte mineralische Bindebaustoff eine erhöhte Fließgrenze aufweist. Ein Beispiel für ein derartiges Anforderungsprofil sind polymerisatmodifizierte standfeste Reparaturmörtel. Sie sollen im gebrauchsfertig angemachten Zustand zwar eine verarbeitungsgerechte Viskosität aufweisen, unmittelbar nach dem Aufbringen auf die meist vertikal ausgerichtete Reparaturstelle unter der Schubspannung ihres Eigengewichtes aber nicht abfließen, d.h. Standfestigkeit zeigen. In diesen Fällen wird man der wäßrigen Polymerisatdispersion als Trocknungshilfsmittel zur Herstellung des modifizierenden redispergierbaren Polymerisatpulvers selbstredend ein verfestigend wirkendes Trocknungshilfsmittel zusetzen.

Aus der DE-A 680 993 ist bekannt, daß es bei der Verwendung von in wäßrigem Medium redispergierbaren Polymerisatpulvern, deren Herstellung durch Sprühtrocknung ihrer wäßrigen Polymerisatdispersion unter alleinigem Zusatz von verfestigend wirkendem Polyvinylalkohol als Sprühhilfsmittel erfolgt, zur Modifikation mineralischer Bindebaustoffe vorteilhaft sein kann, wenn das redispergierbare Polymerisatpulver mehr Polyvinylalkohol enthält, als zur Gewährleistung seiner Redispergierbarkeit erforderlich ist. Für diesen Fall empfiehlt die EP-A 680 993 den gewünschten Überschuß an Polyvinylalkohol dem redispergierbaren Polymerisatpulver erst nach Beendigung der Sprühtrocknung als pulverförmige Reinsubstanz zuzusetzen.

Häufig ist es aber auch erwünscht, daß sich die Fließgrenze des gebrauchsfertig angemachten polymerisatmodifizierten mineralischen Bindebaustoffs, der jeweiligen Problemstellung angepaßt, irgendwo zwischen den beiden vorstehend beschriebenen Extremen bewegt.

In diesen Fällen liegt es nahe, der wäßrigen Polymerisatdispersion als Trocknungshilfsmittel zur Herstellung des modifizierenden redispergierbaren Polymerisatpulvers ein Gemisch aus einem verfestigend wirkenden und einem verflüssigend wirkenden Trocknungshilfsmittel zuzusetzen.

Eine solche Verfahrensweise wird z.B. in der EP-A 477 900, in der DE-A 24 45 813 und in der EP-A 632 096 gegenüber einer solchen Verfahrensweise, bei der man einen der beiden Trocknungshilfsmitteltypen erst nach beendeter Trocknung der wäßrigen Polymerisatdispersion dem resultierenden redispergierbaren Polymerisatpulver als feinteiligen Feststoff zumischt, als generell bevorzugt empfohlen.

Eigene Untersuchungen führten bei zu trocknenden wäßrigen Polymerisatdisperionen, deren Filme eine Tg ≤ 30°C aufwiesen, zum entgegengesetzten Ergebnis. Es zeigte sich nämlich, daß sich die beiden Trocknungshilfsmittel im Regelfall nicht ergänzen, sondern in gewissem Umfang neutralisieren, was sich mit abnehmender Glasübergangstemperatur des Films der zu trocknenden wäßrigen Polymerisatdispersion insofern zunehmend nachteilig bemerkbar macht, als das resultierende Polymerisatpulver einen erhöhten Anteil irreversibler Sekundärteilchen aufweist.

Demgemäß ist Gegenstand der vorliegenden Erfindung ein Verfahren zur Herstellung von zur Modifikation von mineralischen Bindebaustoffen geeignetem Polymerisatpulver durch Trocknung einer wäßrigen Polymerisatdispersion, deren Film eine Glasübergangstemperatur < 30°C aufweist, nach Zusatz von Trocknungshilfsmittel, das dadurch gekennzeichnet ist, daß der wäßrigen Polymerisatdispersion vorab ihrer Trocknung als Trocknungshilfsmittel nur im mit Wasser gebrauchsfertig angemachten mineralischen Bindebaustoff verflüssigend wirkende Trocknungshilfsmittel zugesetzt werden und dem nach der Trocknung resultierenden Polymerisatpulver im Anschluß an die Trocknung wenigstens noch ein im mit Wasser gebrauchsfertig angemachten mineralischen Bindebaustoff verfestigend wirkendes Hilfsmittel als feinteiliger Feststoff zugemischt wird.

Ob ein Trocknungshilfsmittel im mit Wasser gebrauchsfertig angemachten mineralischen Bindebaustoff verfestigend oder verflüssigend wirkt, läßt sich in einfachen Vorversuchen ermitteln. Dazu wird der mineralische Bindebaustoff einmal ohne und einmal mit Trocknungshilfsmittel angemacht (das Verhältnis von Anmachwasser zu mineralischem Bindebaustoff wird dabei konstant gehalten) und jeweils die Fließgrenze ermittelt.

Beispiele für in mit Wasser gebrauchsfertig angemachten zementösen mineralischen Bindebaustoffen verflüssigend wirkende Trocknungshilfsmittel (Trocknungshilfsmittel A) sind insbesondere Polymere und Oligomere, die wenigstens einen Typ der nachfolgenden funktionellen Gruppe aufweisen: Sulfonsäuregruppe, Sulfonatgruppe (konjugierte Base der Sulfonsäure), Carboxylgruppe und Carboxylatgruppe (konjugierte Base der Carbonsäure). Zu diesen Trocknungshilfsmitteln zählen u.a. die Kondensate des Formaldehyds mit Naphthalinsulfonsäure, Melaminsulfonsäure und/oder Phenolsulfonsäure sowie die wasserlöslichen Salze dieser Kondensate, insbesondere die Alkalimetall- (z.B. Na, K) Erdalkalimetall- (z.B. Mg, Ca,) und Ammoniumsalze, wie sie z.B. in der EP-A 78 449, der DE-A 20 49 114, der EP-A 407 889, der DE-A 24 45 813 und der DE-A 41 18 007 beschrieben sind. Ferner gehören zu dieser Gruppe der Trocknungshilfsmittel die Ligninsulfonate der DE-A 33 44 242 sowie die Homo- und Copolymerisate von Wirkmonomeren wie 2-Acrylamido-2-methylpropansulfonsäure sowie die wasserlöslichen Salze dieser Homo- und Copolymerisate, insbesondere die Alkalimetall- (z.B. Na, K), Erdalkalimetall(z.B. Mg, Ca) und Ammoniumsalze, wie sie z.B. in der DE-A 19 539 460, der EP-A 671 435 und in der EP-A 629 650 offenbart sind.

Außerdem gehören zu dieser Gruppe der Trocknungshilfsmittel die Homo- und Copolymerisate von Wirkmonomeren wie Acrylsäure, Methacrylsäure und/oder Maleinsäure sowie die wasserlöslichen Salze dieser Homo- und Copolymerisate, insbesondere die Alkalimetall(z.B. Na, K), Erdalkalimetall- (z.B. Mg, Ca) und Ammoniumsalze, wie sie z.B. in der EP-A 467 103 offenbart werden. Zu den in zementösen Massen verflüssigend wirkenden Trocknungshilfsmitteln zählen auch die Propfpolymere aus Polyalkylenoxiden und ungesättigten Mono-/Dicarbonsäuren bzw. deren Anhydriden nach erfolgter Derivatisierung mit primären/sekundären Aminen oder Alkoholen wie sie z.B. die DE-A 44 06 822 empfiehlt, sowie die Stärken und Stärkederivate der DE-A 33 44 242 und der EP-A 536 597. Beispiele für in mit Wasser gebrauchsfertig angemachten zementösen mineralischen Bindebaustoffen verfestigend wirkende Trocknungshilfsmittel (Trocknungshilfsmittel B) sind z.B. die Homound Copolymerisate des Vinylalkohols wie sie z.B. die EP-A 62 106, die EP-A 680 993, die EP-A 627 540 und die EP-A 601 518 empfehlen, die Homo- und Copolymerisate des N-Vinylpyrrolidons wie sie z.B. die EP-A 576 844 und die DE-AS 22 38 903 offenbaren und die kationischen N-Vinylpyrrolidon-Copolymere der DE-A 19 540 305. Außerdem erwiesen sich die Organopolysiloxane der EP-A 493 168 und die Cellulosederivate der DE-A 33 44 242 als solche verfestigend wirkenden Trocknungshilfsmittel.

Gegenstand der vorliegenden Erfindung ist somit insbesondere ein Verfahren zur Herstellung von zur Modifikation von zementösen mineralischen Bindebaustoffen geeignetem Polymerisatpulver durch Trocknung einer wäßrigen Polymerisatdispersion, deren Film eine Glasübergangstempertur ≤ 30°C aufweist, nach Zusatz von Trocknungshilfsmittel, das dadurch gekennzeichnet ist, daß der wäßrigen Polymerisatdispersion vorab ihrer Trocknung als Trocknungshilfsmittel nur Trocknungshilfsmittel A zugesetzt werden und dem nach der Trocknung resultierenden Polymerisatpulver im Anschluß an die Trocknung wenigstens nach ein Trocknungshilfsmittel B als feinteiliger Feststoff zugemischt wird.

Als erfindungsgemäß geeignetes Trocknungshilfsmittel B eignet sich insbesondere teil- und vollverseiftes Polyvinylacetat (Vinylacetat - Vinylalkohol - Copolymerisat). Der Verseifungsgrad beträgt zweckmäßigerweise 70 bis 100 mol-% (dem entspricht eine Esterzahl von 0 bis ca. 270 (mg KOH/g Polymer); das ist die Menge an Kaliumhydroxid in mg, die zur Verseifung des in 1 g Polymer noch enthaltenen unverseiften Vinylacetats erforderlich wäre). Mit Vorteil liegt der Verseifungsgrad bei 80 bis 95 mol-% (dem entspricht eine Esterzahl von ca. 90 bis ca. 190 (mg KOH/g Polymer). Das Molekulargewicht des verseiften Polyvinylacetat ist dabei in erfindungsgemäß geeigneter Weise z.B. so beschaffen, daß das Polymer im Zahlen-Mittel 100 bis 5000, vorzugsweise 200 bis 1000 Monomereinheiten einpolymerisiert enthält. Vorgenanntes trifft insbesondere dann zu, wenn das Trocknungshilfsmittel B erfindungsgemäß nach beendeter Trocknung der wäßrigen Polymerisatdispersion zugesetzt wird. In diesem Fall wird die Körnung des verseiften Polyvinylacetats zweckmäßigerweise so gewählt, daß 95 Gew.-% einen Korngrößtduchmesser ≤ 250 μm, bevorzugt ≤ 200 μm aufweisen. Normalerweise weisen dabei 95 Gew.-% des verseiften Polyvinylacetats einen Korngrößtdurchmesser ≥ 1 μm auf.

Als erfindungsgemäß geeignetes Trocknungshilfsmittel A eignen sich insbesondere die sulfonsäuregruppenhaltigen Kondensationsprodukte der EP-A 78 449 sowie der DE-A 24 45 813, unter denen die Naphthalinsulfonsäure-Formaldehyd-Kondensate wiederum bevorzugt werden. Dies trifft insbesondere dann zu, wenn das Trocknungshilfsmittel A der zu trocknenden wäßrigen Polymerisatdispersion vorab deren Trocknung erfindungsgemäß als einziges Trocknungshilfsmittel zugesetzt wird. Als in diesem Fall nach beendeter Trocknung erfindungsgemäß zuzusetzendes verfestigend wirkendes Hilfsmittel eignen sich (im Fall zu modifizierender zementöser Massen) vor allem die vorgenannten verseiften Polyvinylacetate.

Vorgesagtes trifft insbesondere dann zu, wenn das erfindungsgemäße Verfahren auf wäßrige Polymerisatdispersionen angewendet wird, deren Film eine Glasübergangstemperatur $T_g \leq 25°C$, oder $\leq 20°C$, oder $\leq 15°C$, $\leq 10°C$, oder $\leq 5°C$, oder $\leq 0°C$ aufweist. Häufig liegt die Glasübergangstemperatur des Films der wäßrigen Polymerisatdispersion, auf die das erfindungsgemäße Verfahren in vorteilhafter Weise anwendbar ist, bei $\geq -65°C$ bzw. $\geq -50°C$ bzw. $\geq -30°C$. Insbesondere ist das erfindungsgemäße Verfahren für die relevante Polymerisatpulverherstellung ausgehend von wäßrigen Polymerisatdispersion mit einem Tg-Wert ihrer Verfilmungen von -20°C bis +20°C bzw. von -15°C bis +15°C geeignet.

D.h., das erfindungsgemäße Verfahren eignet sich im Fall der Trocknung wäßriger Polymerisatdispersionen, deren dispergiertes Polymerisat aus wenigstens eine ethylenisch ungesättigte Gruppe aufweisenden Monomeren wie Olefine, z.B. Ethylen, vinylaromatische Monomere wie Styrol, α-Methylstyrol, o-Chlorstyrol, oder Vinyltoluole, Vinyl- und Vinylidenhalogenide wie Vinyl- und Vinylidenchlorid, Ester aus Vinylalkohol und 1 bis 18 C-Atome aufweisenden Monocarbonsäuren wie Vinylacetat, Vinylpropionat, VInyl-n-butyrat, Vinyllaurat und Vinylstearat sowie im Handel befindliche Monomere VEOVA® 9-11 (VEOVA X ist ein Handelsname der Firma Shell und steht für Vinylester von Carbonsäuren, die auch als Versatic® X-Säuren bezeichnet werden), Ester aus Allylalkohol und 1 bis 18 C-Atome aufweisenden Monocarbonsäuren wie Allylacetat, Allylpropionat, Allyl-n-butyrat, Allyllaurat und Allylstearat, Ester aus vorzugsweise 3 bis 6 C-Atome aufweisenden α,β-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen wie besonders Acrylsäure- und Methacrylsäuremethyl-, -ethyl-, -n-butyl-, -iso-butyl- und -2-ethylhexylester, Maleinsäuredimethylester oder Maleinsäure-n-butylester, Nitrile, α,β-monoethylenisch ungesättigter Carbonsäuren wie Acrylnitril sowie $C_{4-8}$-konjugierte Diene wie 1,3-Butadien und Isopren aufgebaut ist. Die genannten Monomeren bilden in der Regel die Hauptmonomeren, die, bezogen auf die Gesamtmenge der einpolymerisierten Monomeren, normalerweise einen Anteil von mehr als 50 Gew.-% auf sich vereinen. Monomere, die für sich polymerisiert üblicherweise Homopolymerisate ergeben, die eine erhöhte Wasserlöslichkeit aufweisen, werden im Normalfall lediglich als modifizierende Monomere in Mengen, bezogen auf die Gesamtmenge der zu polymerisierenden Monomeren, von weniger als 50 Gew.-%, in der Regel 0,5 bis 20, vorzugsweise 1 bis 10 Gew.-%, miteinpolymerisiert.

Beispiele für derartige Monomere sind 3 bis 6 C-Atome aufweisende α,β-monoethylenisch ungesättigte Mono- und Dicarbonsäuren und deren Amide wie z.B. Acrylsäure, Methacrylsäure, Maleinsäure, Fumarsäure, Itaconsäure, Acrylamid und Methacrylamid, ferner Vinylsulfonsäure und deren wasserlösliche Salze sowie N-Vinylpyrrolidon. Monomere, die üblicherweise die innere Festigkeit der Verfilmungen der wäßrigen Polymerisatdispersion erhöhen, werden in der Regel ebenfalls nur in untergeordneten Mengen, meist 0,5 bis 10 Gew.-% bezogen auf die Gesamtmenge der zu polymerisierenden Monomeren, miteinpolymerisiert. Normalerweise weisen derartige Monomere eine Epoxy-, Hydroxy-, N-Methylol-, Carbonyloder wenigstens zwei nicht konjugierte ethylenisch ungesättigte Doppelbindungen auf. Beispiele hierfür sind N-Alkylolamide von 3 bis 10 C-Atome aufweisenden α,β-monoethylenisch ungesättigten Carbonsäuren sowie deren Ester mit 1 bis 4 C-Atome aufweisenden Alkoholen, unter denen das N-Methylolacrylamid und das N-Methylolmethacrylamid ganz besonders bevorzugt sind, zwei Vinylreste aufweisende Monomere, zwei Vinylidenreste aufweisende Monomere sowie zwei Alkenylreste aufweisende Monomere. Besonders geeignet sind dabei die Di-Ester zweiwertiger Alkohole mit α,β-monoethylenisch ungesättigten Monocarbonsäuren unter denen wiederum die Acryl- und Methacrylsäure vorzugsweise eingesetzt werden. Beispiele für derartige zwei nicht konjugierte ethylenisch ungesättigte Doppelbindungen aufweisende Monomere sind Alkylenglycoldiacrylate- und Dimethacrylate wie Ethylenglycoldiacrylat, 1,3-Butylenglycoldiacrylat, 1,4-Butylenglycoldiacrylat sowie Propylenglycoldiacrylat, Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat oder Triallylcyanurat. In diesem Zusammenhang von besonderer Bedeutung sind auch die Methacrylsäure- und Acrylsäure-$C_1$-$C_8$-Hydroxyalkylester wie n-Hydroxyethyl-, n-Eydroxypropyl- oder n-Hydroxybutylacrylat und -methacrylat sowie Verbindungen wie Diacetonacrylamid und Acetylacetoxyethylacrylat bzw. -methacrylat. Neben ungesättigte Doppelbindungen aufweisenden Monomeren können in untergeordneten Mengen, üblicherweise 0,01 bis 2 Gew.-% bezogen auf die zu polymerisierenden Monomeren, das Molekulargewicht regelnde Substanzen wie tert.-Dodecylmercaptan sowie 3-Mercaptopropyltrimethoxysilan miteinpolymerisiert sein.

D.h., das erfindungsgemäße Verfahren eignet sich u.a. im Fall der Trocknung wäßriger Polymerisatdispersionen, deren dispergiertes Polymerisat in radikalisch polymerisierter Form zu

- 70 bis 100 Gew.-% aus Estern der Acryl- und/oder Methacrylsäure mit 1 bis 12 C-Atome aufweisenden Alkanolen, oder zu

- 70 bis 100 Gew.-% aus Styrol und Estern der Acryl- und/oder Methacrylsäure mit 1 bis 12 C-Atome aufweisenden Alkanolen,

  oder zu

- 70 bis 100 Gew.-% aus Butadien oder aus Styrol und Butadien,

  oder zu

- 40 bis 100 Gew.-% aus Ethylen und Vinylacetat oder Ethylen und Vinylpropionat oder aus Ethylen und Vinylacetat und Vinylpropionat

aufgebaut ist.

Insbesondere ist das erfindungsgemäße Verfahren anwendbar im Fall von zu trocknenden wäßrigen Polymerisatdispersionen PD, deren in disperser Verteilung befindliches Polymerisat in radikalisch polymerisierter Form aus

A) 80 bis 100 Gew.-% wenigstens eines Monomeren aus der Gruppe umfassend Styrol, $\alpha$-Methylstyrol, Vinyltoluole, Ester aus 3 bis 6 C-Atome aufweisenden $\alpha,\beta$-monoethylenisch ungesättigten Carbonsäuren und 1 bis 12 C-Atome aufweisenden Alkanolen, Butadien sowie Vinylund Allylester von 1 bis 12 C-Atome aufweisenden Alkancarbonsäuren und

B) 0 bis 20 Gew.-% sonstigen, wenigstens eine ethylenisch ungesättigte Gruppe aufweisenden, Monomeren

aufgebaut ist. Mögliche Monomere A sind dabei z.B. n-Butylacrylat, 2-Ethylhexylacrylat, Methylmethacrylat und Styrol.

Mögliche Monomere B sind Acrylamid, Methacrylamid, Acrylsäure, Acrylnitril, Methacrylnitril, 2-Acrylamido-2-methylpropansulfonsäure, Vinylpyrrolidon, Hydroxyethylacrylat, Hydroxymethylacrylat, Hydroxypropylacrylat, Hydroxypropylmethacrylat, quaternisiertes Vinylimidazol, N,N-Dialkylaminoalkyl (meth)acrylate, N,N-Dialkylaminoalkyl (meth)acrylamide, Trialkylammoniumalkyl(meth)acrylate und Trialkylammoniumalkyl (meth)acrylamide.

Zur Einstellung der gewünschten Glasübergangstemperatur kann dabei auf die Fox-Beziehung zurückgegriffen werden. Nach Fox (T.G. Fox, Bull. Am. Phys. Soc. (Ser. II) 1, 123 [1956] und Ullmanns Encyclopädie der technischen Chemie, Bd. 19, 4. Auflage, Verlag Chemie, Weinheim (1980), S. 17, 18 gilt für die Glasübergangstemperatur von Mischpolymerisaten in guter Näherung

$$\frac{1}{T_g} = \frac{x^1}{T_g^1} + \frac{x^2}{T_g^2} + \ldots\ldots\ldots \frac{x^n}{T_g^n},$$

wobei $x^1$, $x^2$, ....., $x^n$ die Massenbrüche 1, 2, ....., n und $T_g^1$, $T_g^2$, ....., $T_g^n$ die die Glasübergangstemperaturen der jeweils nur aus einem der Monomeren 1, 2, ....., n aufgebauten Polymerisate in Grad Kelvin bedeuten. Die Glasübergangstemperatur $T_g$ dieser Homopolymerisate der vorgenannten Monomere sind bekannt und z.B. in J. Brandrup, E.H. Immergut, Polymer Handbook 1st Ed., J. Wiley, New York 1966, 2nd Ed., J. Wiley, New York, 1975 und 3rd Ed., J. Wiley, New York 1989 sowie in Ullmann's Encyclopedia of Industrial Chemistry, VCH, Weinheim, Vol. A21 (1992), S. 169 aufgeführt.

Als die disperse Verteilung stabilisierende Schutzkolloide und/ oder Emulgatoren kommen z.B. alle diejenigen in Betracht, die in der DE-A 42 13 965 benannt sind. Desgleichen gilt für die Polymerisationsinitiatoren. Die Feststoffvolumenkonzentration der zu trocknenden wäßrigen Polymerisatdispersion wird im Rahmen des erfindungsgemäßen Verfahrens in der Regel 10 bis 75, häufig 20 bis 65, meist 30 bis 50 Vol.-%, bezogen auf das Volumen der wäßrigen Polymerisatdispersion, betragen.

Selbstverständlich können die erfindungsgemäß der zu trocknenden wäßrigen Polymerisatdispersion vorab deren Trocknung zuzusetzenden Trocknungshilfsmittel auch schon vor und/oder während deren Herstellung nach der Methode der radikalischen wäßrigen Emulsionspolymerisation zugesetzt worden sein, wobei sie in der Regel gleichzeitig die disperse Verteilung der Polymerisatteilchen stabilisierend wirken.

In der Regel beträgt die erfindungsgemäß vorab der Trocknung der zu trocknenden wäßrigen Polymerisatdispersion zuzusetzende Menge an Trocknungshilfsmittel, bezogen auf die Menge an dispergiertem Polymerisat, 0,1 bis 30, häufig 1 oder 5 bis 15 Gew.-%. Die nach beendeter Trocknung zuzusetzende, verfestigend wirkende Hilfsmittelmenge (die Einarbeitung erfolgt zweckmäßigerweise in einem geeigneten Mischorgan für Feststoffe, wie z.B. in einem Rüttler, Rollstuhl oder Schneckenmischer) liegt in typischer Weise, bezogen auf die Menge des Polymerisatpulvers, in entsprechender Weise bei 0,1 bis 30 oder 15, oft 0,5 oder 1 bis 10 bzw. bis 5 Gew.-%. Vorgenanntes gilt insbesondere dann, wenn das vorab der Trocknung zugesetzte Trocknungshilfsmittel ein sulfonsäuregruppenhaltiges Kondensationsprodukt des Formaldehyds und das nach der Trocknung zugesetzte Trocknungshilfsmittel verseiftes Polyvinylacetat ist. Dies wiederum vor allem dann, wenn die zu trocknende wäßrige Polymerisatdispersion eine Polymerisatdispersion PD ist.

Der gewichtsmittlere Durchmesser der in der erfindungsgemäß zu trocknenden wäßrigen Polymerisatdispersion disper verteilten Polymerisatteilchen beträgt normalerweise ≥ 250 nm bis ≤ 2000 nm, häufig ≥ 250 nm bis ≤ 1500

nm und oft $\geq 250$ bis $\leq 1000$ nm.

In der Regel wird die erfindungsgemäße Trocknung durch Sprühtrocknung der wäßrigen Polymerisatdispersion bei einer Eingangstemperatur $T_E$ des Warmluftstroms von 100 bis 200°C, vorzugsweise 120 bis 160°C, und einer Ausgangstemperatur $T_A$ des Warmluftstroms von 30 bis 90°C, vorzugsweise 50 bis 90°C durchgeführt. Üblicherweise erfolgt die Sprühtrocknung in einem Trockenturm. Das Versprühen der wäßrigen Polymerisatdispersion im Warmluftstrom kann dabei z.B. mittels Ein- oder Mehrstoffdüsen oder über eine rotierende Scheibe erfolgen. Die Abscheidung der Polymerisatpulver erfolgt normalerweise unter Verwendung von Zyklonen oder Filterabscheidern. Die versprühte wäßrige Polymerisatdispersion und der Warmluftstrom werden vorzugsweise parallel geführt. Häufig wird während des Sprühtrockenvorgangs im Turm noch ein feinteiliges mineralisches Anti-Blockmittel zudosiert (z.B. feinteiliges Kieselgel), das insbesondere ein Verklumpen der bei der Sprühtrocknung anfallenden sekundären Polymerisatteilchen während einer längeren Lagerung des erfindungsgemäß resultierenden Polymerisatpulvers unterbindet. Gemäß der JP-A 7/53728 kann der Zusatz solcher anorganischen Anti-Blockmittel auch vorab der Sprühtrocknung der wäßrigen Polymerisatdispersion in die wäßrige Polymerisatdispersion erfolgen. An dieser Stelle sei festgehalten, daß das im Rahmen der erfindungsgemäßen Verfahrensweise nach beendeter Trocknung dem anfallenden Polymerisatpulver zuzusetzende feinteilige feste Hilfsmittel in der Regel gleichfalls anti-blockend wirkt, was eine zweite vorteilhafte Wesensart der erfindungsgemäßen Verfahrensweise ausmacht.

Der Hauptvorteil der erfindungsgemäßen Verfahrensweise liegt jedoch darin begründet, daß ohne Minderung der Redispergierbarkeit Polymerisatpulver erhältlich sind, deren Verwendung zur Modifikation mineralischer Bindebaustoffe die gezielte Einstellung einer gewünschten Fließgrenze derselben im mit Wasser gebrauchsfertig angemachten Zustand ermöglicht. Dabei überrascht, daß die verfestigende Wirkung des erfindungsgemäß nach beendeter Trocknung zugesetzten Hilfsmittels ausgeprägter ist, als bei einem Zusatz vorab der Trocknung, die selbstredend auch nach der Methode der Gefriertrocknung erfolgen kann.

In besonderer Weise eignen sich die erfindungsgemäß erhältlichen Polymerisatpulver zur Modifikation von mineralischen Bindebaustoffen, deren mineralisches Bindemittel aus 70 bis 100 Gew.-% Zement und 0 bis 30 Gew.-% Gips bestehen. Dies gilt insbesondere dann, wenn Zement das alleinige mineralische Bindemittel ist. Die erfindungsgemäße Wirkung ist dabei von der Zementart im wesentlichen unabhängig. Je nach Vorhaben können also Hochofenzement, Ölschieferzement, Portlandzement, hydrophobierter Portlandzement, Schnellzement, Quellzement oder Tonerdezement verwendet werden, wobei sich die Verwendung von Portlandzement als besonders günstig erweist.

In typischer Weise enthalten die Trockenzusammensetzungen mineralische Bindebaustoffe, bezogen auf die Menge an enthaltenem mineralischem Bindemittel, 0,1 bis 20 Gew.-% modifizierendes Polymerisatpulver.

Die erfindungsgemäß erhältlichen Polymerisatpulver eignen sich z.B. zur Modifizierung von zementösen Reparatur- oder Armierungsmörteln.

Eine gängige Methode der Wärmedämmung besteht z.B. darin, Styropor-Dämmstoffplatten auf Häuserfassaden anzubringen. Üblicherweise wird dabei die Rückseite der Styropor-Dämmstoffplatte mittels mit Polymerisaten modifiziertem zementösem Mörtel auf der Fassade (z.B. aus Mauerwerk, Beton, mineralischem Putz, etc.) befestigt. Auf die Vorderseite der Styropor-Dämmstoffplatten wird in der Regel der gleiche Mörtel als sogenannter Armierungsmörtel aufgebracht. Dieser dient normalerweise zur Einbettung von Gewebearmierungen (z.B. aus Glasfasern, Polyester, Polypropylen u.a.), die in der Regel zur Stoßfugenüberbrückung zwischen einzelnen Styroporplatten eingesetzt werden und die Bildung von Schwund- und Bewegungsrissen in der aufzubringenden zementösen Grundbeschichtung an den Styroporplattenstößen und Kanten verhindern sollen. Abschließend wird über das Gittergewebe üblicherweise zur vollständigen Einbettung des Gewebes nochmals Armierungsmörtel aufgebracht, die Oberfläche egalisiert und nach Durchhärtung dieser zementösen Grundbeschichtung eine Abschlußbeschichtung, z.B. ein mineralischer oder Kunstharzputz, aufgetragen (vgl. EP-A 698 586).

Verwendet man nun als Armierungsmörtel einen solchen, der mit im Wasser redispergierbaren Polymerisatpulvern modifiziert wurde, deren wäßrige Polymerisatausgangsdispersion im verfilmten Zustand eine Tg von $\leq 30°C$ bis -60°C, vorzugsweise 0°C bis -50°C, aufweist, so verfügt dieser im verfestigten Zustand über eine erhöhte Elastizität und weist somit Rißüberbrückungsfähigkeit auf (vgl. AT-PS 359904). D.h., bei seiner Anwendung kann auf die Gewebearmierung verzichtet und die zementöse Grundbeschichtung bis zur erforderlichen Schichtdicke (in der Regel 3 bis 30 mm, häufig 5 bis 20 mm) in einem Arbeitsgang auftragen werden.

Letzteres setzt jedoch voraus, daß der mit Polymerisat modifizierte Armierungsmörtel, insbesondere auch bei großflächigem Auftrag, die der jeweiligen Anwendungsstelle (über Kopf, an Vertikalen, an Schrägen etc.) angemessene Fließgrenze aufweist, die einerseits ein Fließen (Absacken) des aufgetragenen Mörtels unter der Einwirkung seines Eigengewichts verhindert, andererseits jedoch unter Einwirkung entsprechender Kräfte ein Verarbeiten via Aufspritzen oder händig noch ermöglicht. Erfindungsgemäß läßt sich diese Fließgrenze bedarfsgerecht gezielt einstellen.

Häufig werden dem Armierungsmörtel dabei noch natürliche oder synthetische Fasern aus Materialien wie z.B. Dralon (Lauge z.B. 1 bis 10 mm, längenbezogene Masse z.B. 3 bis 10 dtex) zugesetzt, was dessen Rißüberbrückungsfähigkeit zusätzlich steigert.

Zur weiteren Verbesserung der Verarbeitungseigenschaften solcher Armierungsmörtel setzt man selbigen vielfach Cellulosederivate und Microsilica zu. Erste wirken üblicherweise verdickend und letztere bilden normalerweise Thixotropierungsmittel, die die Fließfähigkeit des wäßrigen Mörtels vor seiner Verfestigung im aufgebrachten Ruhestand zusätzlich erniedrigen. Calciumcarbonat und Quarzsand bilden in der Regel die übrigen Zuschläge. Durch Zusatz von Entschäumern (unter dem Aspekt "Trockenmörtel" vorzugsweise in Pulverform) kann im verfestigten Zustand ein praxisgerechter Luftporengehalt (5 bis 20 Vol.-%) des verfestigten zementösen Armierungsmörtel erreicht werden.

Bei höchsten Rißüberbrückungsanforderungen wird man dem zementösen Armierungsmörtel, bezogen auf enthaltenen Zement, 9 bis 20, bei geringeren Rißüberbrückungsanforderungen 4 bis 9 Gew.-% modifizierendes Polymerisatpulver zusetzen. Lediglich bei besonders geringen Rißüberbrückungsanforderungen wird sich die zugesetzte Menge an modifizierendem Polymerisatpulver, in entsprechender Weise bezogen, auf 0,1 bis 4 Gew.-% beschränken.

Selbstverständlich kann das modifizierende Polymerisatpulver auch aus solchen wäßrigen Polymerisatdispersionen durch Trocknung erhalten worden sein, die die Haftung ihres Films auf Materialien wie Styropor erhöhende Zusätze enthalten, wie es z.B. die EP-A 698 586 beschreibt. Auch können vorab der Trocknung die Glasübergangstemperatur des dispergierten Polymerisats senkende Additive zugesetzt worden sein. Vorzugsweise werden jedoch keine solchen Additive zugesetzt, d.h., die in dieser Schrift genannten Glasübergangstemperaturen der Filme der Polymerisatdispersionen entsprechen vorzugsweise im wesentlichen den Glasübergangstemperaturen der darin dispergierten Polymerisate. Typische Armierungsmörtel bestehen als mineralische Bindebaustofftrockenzubereitung aus

- 20 bis 60, vorzugsweise 20 bis 50 Gew.-% mineralischem Bindemittel (vorzugsweise ausschließlich Zement)

- 0,1 bis 20 häufig 0,1 bis 10 Gew.-% erfindungsgemäß erhältlichem, modifizierendem Polymerisatpulver,

- bis zu 25 Gew.-% an sich üblichen Hilfsmitteln (z.B. Entschäumer oder Verdicker) und

- als Restmenge Zuschlägen wie z.B. Sand, Füllstoffe (z.B. $CaCO_3$), Pigmente (z.B. $TiO_2$) natürliche und/oder synthetische Fasern.

Beispiele

a) Herstellung einer wäßrigen Polymerisatdispersion D1

In einem Polymerisationsgefäß wurde ein Gemisch aus

| | |
|---|---|
| 150 g | Wasser, |
| 5,6 g | einer 20 gew.-%igen wäßrigen Lösung von ethoxyliertem p-Isooctylphenol (EO-Grad: 25) = Emulgatorlösung 1, |
| 0,48 g | einer 35 gew.-%igen wäßrigen Lösung des Na-Salzes des Schwefelsäurehalbesters von ethoxyliertem p-Isooctylphenol (EO-Grad: 25) = Emulgatorlösung 2, |
| 3,4 g | einer 20 gew.-%igen wäßrigen Polyacrylamid-Lösung = Schutzkolloid, |
| 1,7 g | Natriumhydrogencarbonat und |
| 3,9 g | einer 10 gew.-%igen wäßrigen Ameisensäure-Lösung |

pH-Puffer,

auf 90°C erhitzt. Anschließend wurden zu diesem Gemisch, zeitgleich beginnend und unter Aufrechterhaltung der 90°C, innerhalb von 2 h 742,8 g einer wäßrigen Monomerenemulsion aus

| | |
|---|---|
| 403,2 g | n-Butylacrylat, |

(fortgesetzt)

| 140,0 g | Styrol, |
|---|---|
| 11,2 g | Acrylamid, |
| 5,6 g | Methacrylamid, |
| 8,4 g | Emulgatorlösung 1, |
| 11,5 g | Emulgatorlösung 2 und |
| 162,9 g | Wasser, |

sowie innerhalb von 2,5 h eine Lösung aus

| 3,3 g | Natriumperoxodisulfat (radikalischer Starter) und |
|---|---|
| 90 g | Wasser |

dem Polymerisationsgefäß kontinuierlich zugeführt. Nach beendeter Zufuhr wurde das Reaktionsgemisch noch 120 min bei 90°C gerührt und anschließend auf 60°C abgekühlt.

Zur Verringerung des Gehaltes an Restmonomeren wurden der erhaltenen wäßrigen Polymerisatdispersion zunächst eine Lösung von 1,1 g tert.-Butylhydroperoxid in 5,5 g Wasser auf einmal zugesetzt und dann, unter Aufrechterhaltung der 60°C, innerhalb von 1 h eine Lösung von 0,6 g Natriumformaldehydsulfoxylat in 15 g Wasser kontinuierlich zugeführt und nach beendeter Zufuhr noch 30 min bei 60°C nachgerührt. 15 min nach beendetem Rühren wurde auf 25°C abgekühlt und zur Erhöhung der Stabilität der dispersen Verteilung der pH-Wert des wäßrigen Dispergiermediums auf einen Wert von 8,7 erhöht (mittels Zusatz von 3,5 g einer 10 gew.-%igen wäßrigen Ammoniaklösung). Schließlich wurde über ein Sieb mit einer Maschenweite von 250 $\mu$m filtriert.

Die resultierende wäßrige Polymerisatdispersion D1 wies einen Feststoffgehalt von 55,3 Gew.-% und eine auf reines Wasser bezogene relative Lichtdurchlässigkeit von 8 % (2,5 cm Schichtdicke, Verdünnung der wäßrigen Polymerisatdispersion D1 auf einen Feststoffgehalt von 0,01 Gew.-%) auf. Die Glasübergangstemperatur des dispergierten Polymerisats errechnet sich nach der Beziehung von Fox zu $Tg^{Fox} = 7°C$.

b) Trocknungshilfsmittel T1:

T1 war das Trocknungshilfsmittel aus Beispiel 4 der EP-B 78 449. Dies ist das Natriumsalz eines Naphthalinsulfonsäure-Formaldehyd-Kondensationsproduktes.

c) Trocknungshilfsmittel T2:

Verseiftes Polyvinylacetat (= Copolymerisat aus Polyvinylalkohol und Polyvinylacetat) mit einem Verseifungsgrad von 87,7 $\pm$ 1 mol-%, einer Esterzahl von 140 $\pm$ 10 mgKOH/g Polymerisat sowie einer Viskosität (bestimmt nach DIN 53015 bei einer Temperatur von 23°C) seiner 4 gew.-%igen wäßrigen Lösung von 4 $\pm$ 0,5 mPa·s.

Der Korngrößtdurchmesser von 95 Gew.-% des verseiften Polyvinylacetat betrug $\leq$ 200 $\mu$m und $\geq$ 1 $\mu$m.

d) Sprühtrocknung der wäßrigen Polymerisatdispersion D1 zu Polymerisatpulveren P1 bis P5 und Untersuchung der Redispergierbarkeit dieser Polymerisatpulver

P1:   Zunächst wurde die wäßrige Polymerisatdispersion D1 auf einen Feststoffgehalt von 40 gew.-% verdünnt. Dann wurde ein 20 gew.-%ige wäßrige Lösung des Trocknungshilfsmittels T1 hergestellt. In diese wäßrige Lösung wurde unter kräftigem Rühren soviel der auf einen Feststoffgehalt von 40 gew.-% verdünnten wäßrigen Polymerisatdispersion eingerührt, bis der Gesamtstoffgehalt der resultierenden Mischung 35 Gew.-% betrug.
Die Sprühtrocknung dieser 35 gew.-%igen wäßrigen Mischung erfolgte in einem Minor-Labortrockner der Fa. GEA Wiegand GmbH (Geschäftsbereich Niro), DE, mit Zweistoffdüsenzerstäubung (Durchmesser der Düse 1,3 mm) bei einer Turm-Eingangstemperatur von 130°C und einer Turm-Ausgangstemperatur von 60°C (Leistung: ca. 2 kg Sprühspeise/h). Als Anti-Blockmittel wurden gleichzeitig mit der Sprühspeise ca. 2,5 Gew.-% (bezogen auf den Festgehalt der Sprühspeise) einer feinteiligen Kieselsäure (mittlerer Korngrößtdurchmesser: 25 $\mu$m) in die Trocknungskammer zudosiert.

P2:   Wie P1; nach beendeter Sprühtrocknung wurden noch 3 Gew.-%, bezogen auf P1, des Trocknungshilfsmittels T2 in feinteiliger fester Form mechanisch eingearbeitet (auf einem Rüttler SM der Fa. Edmund Bühler Laborgerätebau, DE, Bodelshausen).

P3:   Wie P2; die nachträglich eingearbeitete Menge an T2 betrug jedoch, in gleicher Weise bezogen, 5 Gew.-%.

P4:   Wie P1, dem sprühzutrocknenden wäßrigen Gemisch wurden jedoch vorab seiner Sprühtrocknung noch 3 Gew.-%, bezogen auf den Feststoffgehalt des Gemisches, des Trocknungshilfsmittels T2 zugesetzt.

P5:   Wie P4, die vorab der Sprühtrocknung zugesetzte Menge an T2 betrug jedoch, in gleicher Weise bezogen, 5 Gew.-%.

Zur Überprüfung der Redispergierbarkeit der erhaltenen Polymerisatpulver wurde wie folgt vorgegangen:

In eine Glasflasche wurden 9C g Wasser eingezogen und bei 25°C mit 10 g Polymerisatpulver versetzt. Das Gemisch wurde mit einem U1-tra-Turrax 1 der Fa. Janke & Kunkel, IDA-Labortechnik, Staufen DE, 1 min bei 9500 U/min gerührt und in einen Meßzylinder gefüllt. Anschließend wurde der mit einem Kunststoffstopfen verschlossene Meßzylinder bei 25°C 72h unbewegt gelagert. Danach wurde die Redispersion gut geschüttelt und über ein 72-μm-Sieb filtriert. Das den Filterkuchen enthaltende Sieb wurde bei 80°C 12h im Trockenschrank gelagert und anschließend durch Wägung der prozentuale Gewichtsanteil des getrockneten Koagulats, bezogen auf die eingesetzte Pulvermenge (10 g), bestimmt. Die Ergebnisse zeigt die nachfolgende Tabelle 1.

Tabelle 1

| Pulver | Koagulat |
|--------|----------|
| P1 | 1,2 Gew.-% |
| P2 | 1,2 Gew.-% |
| P3 | 1,2 Gew.-% |
| P4 | 3,1 Gew.-% |
| P5 | 8,0 Gew.-% |

Obwohl zur Herstellung der Pulver P4 und P5 vorab der Sprühtrocknung zusätzlich zur identischen Menge an Trocknungshilfsmittel T1 das Trocknungshilfsmittel T2 zugesetzt wurde, weisen die Pulver P4 und P5 die schlechteste Redispergierbarkeit auf. Eine nach durchgeführter Sprühtrocknung erfolgende erfindungsgemäße Zugabe des Hilfsmittels T2 zu P1 beeinflußt die Redispergierbarkeit von P1 hingegen nicht.

e) Verwendung der Polymerisatpulver P1 bis P5 zur Modifizierung von Armierungsmörtel und Beeinflussung der Fließgrenze desselben

Gemäß nachfolgender Rezeptur wurde ein gebrauchsfähig angemachter Armierungsmörtel zubereitet:

| 370 g | Omyacarb® 130 GU (weißer Calciumcarbonat der Fa. Omya GmbH, Köln), |
|-------|-------------------------------------------------------------------|
| 140 g | Quarzsand (Korngrößtdurchmesser 0,1 bis 0,6 mm), |
| 430 g | Portlandzement PZ 35 F, |
| 18 g | feinteiliges Siliciumdioxid (Micorsilica der Fa. Elkem GmbH, Allensbach), |
| 90 g | Polymerisatpulver, |
| 10 g | Lumiten® EP 3108 (Entschäumer der BASF AG), |
| 2 g | Walocel® MT 20000 PV (Methylhydroxyethylcellulose, verzögert löslich in pH-neutralem kaltem Wasser, Verdicker der Fa. Wolff Walsrode AG), |
| 3 g | Dralonfasern (weiß, halbmatt, 4 mm Länge, 6,7 dtex) und |
| 195 g | Wasser. |

Der gebrauchsfertig angemachte Mörtel wurde auf eine 6 m² große, mit Styroporplatten beplankte, senkrecht stehende Prüfwand mittels einer Traufel (Edelstahl, 280 mm x 130 mm) in einer Schichtdicke von 8 mm händig aufgebracht und geglättet. 24 h später wurde das Fließen des aufgebrachten Armierungsmörtels (bzw. dessen Standfestigkeit) unter seinem Eigengewicht wie folgt visuell beurteilt:

Note 1 =   sehr gute Standfestigkeit, keine Nasenbildung;
Note 2 =   gute Standfestigkeit, kaum Nasenbildung;

Note 3 =     befriedigende Standfestigkeit, geringe Nasenbildung;
Note 4 =     geringes Absacken, deutliche Nasenbildung;
Note 5 =     starkes Absacken, Säcke mit Rißbildung;
Note 6 =     Mörtel läuft ab.

Die Ergebnisse zeigt die nachfolgende Tabelle 2.

Tabelle 2

| Pulver | Beurteilung |
| --- | --- |
| P1 | 6 |
| P2 | 1 |
| P3 | 1 |
| P4 | 6 |
| P5 | 3 |

Die Beispiele weisen aus, daß bei einer Zugabe des verseiften Polyvinylacetas vorab der Sprühtrocknung die verflüssigende Wirkung des Naphthalinsulfonsäure-Formaldehyd-Kondensats, verglichen mit einer nachträglichen Zugabe des verseiften Polyvinylacetats, nur in geringerem Ausmaß kompensiert wird. D.h., nach beendeter Sprühtrocknung zugesetztes verseiftes Polyvinylacetat wirkt ausgeprägter verfestigend.

**Patentansprüche**

1.    Verfahren zur Herstellung von zur Modifikation von mineralischen Bindebaustoffen geeignetem Polymerisatpulver durch Trocknung einer wäßrigen Polymerisatdispersion, deren Film eine Glasübergangstemperatur Tg $\leq$ 30°C aufweist, nach Zusatz von Trocknungshilfsmittel, **dadurch gekennzeichnet, daß** der wäßrigen Polymerisatdispersion vorab ihrer Trocknung als Trocknungshilfsmittel nur im mit Wasser gebrauchsfertig angemachten mineralischen Bindebaustoff verflüssigend wirkende Trocknungshilfsmittel zugesetzt werden und dem nach der Trocknung resultierenden Polymerisatpulver im Anschluß an die Trocknung wenigstens noch ein im mit Wasser gebrauchsfertig angemachten mineralischen Bindebaustoff verfestigend wirkendes Hilfsmittel als feinteiliger Feststoff zugemischt wird.

2.    Verfahren nach Anspruch 1, **dadurch gekennzeichnet, daß** der mineralische Bindebaustoff als mineralisches Bindemittel Zement enthält.

3.    Verfahren nach Anspruch 2, **dadurch gekennzeichnet, daß** das im mit Wasser gebrauchsfertig angemachten mineralischen Bindebaustoff verflüssigend wirkende Trocknungshilfsmittel ein Polymeres und/oder Oligomeres ist, das wenigstens einen Typ der nachfolgenden funktionellen Gruppen aufweist: Sulfonsäuregruppe, Sulfonatgruppe, Carboxylgruppe und Carboxylatgruppe.

4.    Verfahren nach Anspruch 3, **dadurch gekennzeichnet, daß** das im mit Wasser gebrauchsfertig angemachten mineralischen Bindebaustoff verflüssigend wirkende Polymere und/oder Oligomere wenigstens ein solches aus der Gruppe umfassende Kondensate des Formaldehyds mit Naphthalinsulfonsäure, Melaminsulfonsäure und/oder Phenolsulfonsäure, die Salze dieser Kondensate, Ligninsulfonate, Homo- und Copolymerisate der 2-Acrylamido-2-methylpropansulfonsäure, der Acrylsäure, der Methacrylsäure und/oder Maleinsäure und die Salze dieser Homo- und Copolymerisate, ist.

5.    Verfahren nach einem der Ansprüche 2 bis 4, **dadurch gekennzeichnet, daß** das im mit Wasser gebrauchsfertig angemachten mineralischen Bindebaustoff verfestigend wirkende Hilfsmittel ein Vinylalkohol oder N-Vinylpyrrolidon einpolymerisiert enthaltendes Homo- oder Copolymerisat, ein Organopolysiloxan und/oder ein Cellulosederivat ist.

6.    Verfahren nach Anspruch 5, **dadurch gekennzeichnet, daß** das im mit Wasser gebrauchsfertig angemachten mineralischen Bindebaustoff verfestigend wirkende Homo- oder Copolymerisat des Vinylalkohols ein verseiftes Polyvinylacetat ist, dessen Verseifungsgrad 70 bis 100 mol-% beträgt.

7. Verfahren nach Anspruch 6, **dadurch gekennzeichnet, daß** das verseifte Polyvinylacetat im Zahlenmittel 100 bis 5000 Monomereinheiten einpolymerisiert enthält.

8. Verfahren nach Anspruch 7, **dadurch gekennzeichnet, daß** das verseifte Polyvinylacetat dem nach der Trocknung resultierenden Polymerisatpulver als feinteiliger Feststoff zugemischt wird und dabei so beschaffen ist, daß 95 % seines Gewichtes einen Korngrößtdurchmesser ≤ 250 μm aufweisen.

9. Verfahren nach einem der Ansprüche 1 bis 8, **dadurch gekennzeichnet, daß** die Glasübergangstemperatur des Films der zu trocknenden wäßrigen Polymerisatdispersion ≤ 20°C beträgt.

10. Verfahren nach einem der Ansprüche 1 bis 8, **dadurch gekennzeichnet, daß** die Glasübergangstemperatur des Films der zu trocknenden wäßrigen Polymerisatdispersion ≤ 10°C beträgt.

11. Verfahren nach einem der Ansprüche 1 bis 8, **dadurch gekennzeichnet, daß** die Glasübergangstemperatur des Films der zu trocknenden wäßrigen Polymerisatdispersion ≤ 0°C beträgt.

12. Verfahren nach einem der Ansprüche 1 bis 11, **dadurch gekennzeichnet, daß** das dispergierte Polymerisat der zu trocknenden wäßrigen Polymerisatdispersion in radikalisch polymerisierter Form zu 70 bis 100 Gew.-% aus Estern der Acryl- und/oder Methacrylsäure mit 1 bis 12 C-Atome aufweisenden Alkanolen aufgebaut ist.

13. Verfahren nach einem der Ansprüche 1 bis 11, **dadurch gekennzeichnet, daß** das dispergierte Polymerisat der zu trocknenden wäßrigen Polymerisatdispersion in radikalisch polymerisierter Form zu 70 bis 100 Gew.-% aus Styrol und Estern der Acryl- und/oder Methacrylsäure mit 1 bis 12 C-Atome aufweisenden Alkanolen aufgebaut ist.

14. Verfahren nach einem der Ansprüche 1 bis 11, **dadurch gekennzeichnet, daß** das dispergierte Polymerisat der zu trocknenden wäßrigen Polymerisatdispersion in radikalisch polymerisierter Form zu 70 bis 100 Gew.-% aus Butadien oder aus Styrol und Butadien aufgebaut ist.

15. Verfahren nach einem der Ansprüche 1 bis 11, **dadurch gekennzeichnet, daß** das dispergierte Polymerisat der zu trocknenden wäßrigen Polymerisatdispersion in radikalisch polymerisierter Form zu 40 bis 100 Gew.-% aus Ethylen und wenigstens einem der beiden Monomeren Vinylacetat und Vinylpropionat aufgebaut ist.

16. Verfahren nach einem der Ansprüche 1 bis 11, **dadurch gekennzeichnet, daß** das dispergierte Polymerisat der zu trocknenden wäßrigen Polymerisatdispersion in radikalisch polymerisierter Form zu

| 80 bis 100 Gew.-% | aus Monomeren aus der Gruppe umfassend Styrol, α-Methylstyrol, Vinyltoluole, Ester aus 3 bis 6 C-Atome aufweisenden α,β-monethylenisch ungesättigten Carbonsäuren und 1 bis 12 C-Atome aufweisenden Alkanolen, Butadien sowie Vinyl- und Allylester von 1 bis 12 C-Atome aufweisenden Alkancarbonsäuren und |
|---|---|
| 0 bis 20 Gew.- | sonstigen, wenigstens eine ethylenisch ungesättigte Gruppe aufweisenden Monomeren aufgebaut ist. |

17. Verfahren nach einem der Ansprüche 1 bis 16, **dadurch gekennzeichnet, daß** die Menge des vor der Trocknung zugesetzten Trocknungshilfsmittels, bezogen auf die Menge des dispergierten Polymerisats, 0,1 bis 30 Gew.-% beträgt.

18. Verfahren nach einem der Ansprüche 1 bis 17, **dadurch gekennzeichnet, daß** die Menge des im Anschluß an die Trocknung als feinteiliger Feststoff zugesetzten Hilfsmittels, bezogen auf die Menge des bei der Trocknung anfallenden Polymerisatpulvers, 0,1 bis 30 Gew.-% beträgt.

19. Verfahren nach einem der Ansprüche 1 bis 18, **dadurch gekennzeichnet, daß** der gewichtsmittlere Durchmesser der in der zu trocknenden wäßrigen Polymerisatdispersion dispers verteilten Polymerisatteilchen 250 bis 2000 nm beträgt.

20. Verfahren nach einem der Ansprüche 1 bis 18, **dadurch gekennzeichnet, daß** der gewichtsmittlere Durchmesser der in der zu trocknenden wäßrigen Polymerisatdispersion dispers verteilten Polymerisatteilchen 250 bis 1000 nm beträgt.

**21.** Verfahren nach einem der Ansprüche 1 bis 20, **dadurch gekennzeichnet, daß** die Trocknung der wäßrigen Polymerisatdispersion nach der Methode der Sprühtrocknung erfolgt.

**22.** Verfahren nach Anspruch 21, **dadurch gekennzeichnet, daß** die Sprühtrocknung bei einer Eingangstemperatur $T_E$ des Warmluftstroms von 100 bis 200°C und bei einer Ausgangstemperatur $T_A$ des Warmluftstroms von 30 bis 90°C durchgeführt wird.

**23.** Verfahren nach Anspruch 21 oder 22, **dadurch gekennzeichnet, daß** vor, während und/oder nach dem Sprühtrockenvorgang noch ein feinteiliges mineralisches Anti-Blockmittel zudosiert wird.

**24.** Polymerisatpulver, erhältlich nach einem Verfahren gemäß einem der Ansprüche 1 bis 23.

**25.** Verwendung von Polymerisatpulvern gemäß Anspruch 24 zur Modifikation von mineralischen Bindebaustoffen.

**26.** Mineralische Bindebaustoffe, enthaltend Polymerisatpulver gemäß Anspruch 24.

**27.** Trockenmörtelzubereitung, bestehend aus

- 20 bis 60 Gew.-% mineralischem Bindemittel,
- 0,1 bis 20 Gew.-% Polymerisatpulver nach Anspruch 24,
- bis zu 25 Gew.-% übliche Hilfsmittel und
- als Restmenge Zuschläge wie Sand, Füllstoffe, Pigmente, natürliche Fasern und/oder synthetische Fasern.

**Claims**

**1.** A process for preparing an addition-polymer powder suitable for modifying a binding mineral building material by drying an aqueous addition-polymer dispersion whose film has a glass transition temperature Tg < 30°C and to which a drying assistant has been added, which comprises adding to the aqueous addition-polymer dispersion before drying only a drying assistant which will have a plasticizing effect in the ready-to-use mix of the binding mineral building material with water and admixing the resulting dry addition-polymer powder with at least one assistant which will have a deplasticizing effect in the ready-to-use mix of the binding mineral building material with water and is in the form of a finely divided solid.

**2.** The process according to claim 1, wherein the binding mineral building material comprises cement as mineral binder.

**3.** The process according to claim 2, wherein the plasticizing drying assistant is a polymer and/or oligomer containing at least one type of the following functional groups: sulfo, sulfonato, carboxyl and carboxylato.

**4.** The process according to claim 3, wherein the plasticizing polymer and/or oligomer is at least one such selected from the group consisting of condensates of formaldehyde with naphthalenesulfonic acid, melaminesulfonic acid and/or phenolsulfonic acid, the salts of these condensates, ligninsulfonates, homo- and copolymers of 2-acrylamido-2-methylpropanesulfonic acid, of acrylic acid, of methacrylic acid and/or maleic acid and the salts of these homo- and copolymers.

**5.** The process according to any of claims 2 to 4, wherein the deplasticizing assistant is a vinyl alcohol or N-vinylpyrrolidone homo- or copolymer, an organopolysiloxane and/or a cellulose derivative.

**6.** The process according to claim 5, wherein the deplasticizing vinyl alcohol homo- or copolymer is a hydrolyzed polyvinyl acetate whose degree of hydrolysis is from 70 to 100 mol%.

**7.** The process according to claim 6, wherein the hydrolyzed polyvinyl acetate has a number average monomer unit content of from 100 to 5000.

**8.** The process according to claim 7, wherein the hydrolyzed polyvinyl acetate is mixed into the dried addition-polymer powder in the form of a finely divided solid 95% of whose weight have a largest particle diameter ≤ 250 μm.

EP 0 812 872 B2

9. The process according to any of claims 1 to 8, wherein the glass transition temperature of the film of the aqueous addition-polymer dispersion to be dried is ≤ 20°C.

10. The process according to any of claims 1 to 8, wherein the glass transition temperature of the film of the aqueous addition-polymer dispersion to be dried is ≤ 10°C.

11. The process according to any of claims 1 to 8, wherein the glass transition temperature of the film of the aqueous addition-polymer dispersion to be dried is ≤ 0°C.

12. The process according to any of claims 1 to 11, wherein the dispersed addition polymer in the aqueous addition-polymer dispersion to be dried is free-radically polymerized from 70 to 100% by weight of esters of acrylic and/or methacrylic acid with alkanols having from 1 to 12 carbon atoms.

13. The process according to any of claims 1 to 11, wherein the dispersed addition polymer in the aqueous addition-polymer dispersion to be dried is free-radically polymerized from 70 to 100% by weight of styrene and esters of acrylic and/or methacrylic acid with alkanols having from 1 to 12 carbon atoms.

14. The process according to any of claims 1 to 11, wherein the dispersed addition polymer in the aqueous addition-polymer dispersion to be dried is free-radically polymerized from 70 to 100% by weight of butadiene or of styrene and butadiene.

15. The process according to any of claims 1 to 11, wherein the dispersed addition polymer in the aqueous addition-polymer dispersion to be dried is free-radically polymerized from 40 to 100% by weight of ethylene and at least one of vinyl acetate and vinyl propionate.

16. The process according to any of claims 1 to 11, wherein the dispersed addition polymer in the aqueous addition-polymer dispersion to be dried is free-radically polymerized

| | |
|---|---|
| from 80 to 100% by weight | of monomers selected from the group consisting of styrene, $\alpha$-methylstyrene, vinyltoluenes, esters between $\alpha,\beta$-monoethylenically unsaturated carboxylic acids having from 3 to 6 carbon atoms and alkanols having from 1 to 12 carbon atoms, butadiene and also vinyl and allyl esters of alkanecarboxylic acids having from 1 to 12 carbon atoms, and from |
| 0 to 20% by weight | of other monomers having at least one ethylenically unsaturated group. |

17. The process according to any of claims 1 to 16, wherein the amount of drying assistant added before drying is from 0.1 to 30% by weight, based on the amount of dispersed addition polymer.

18. The process according to any of claims 1 to 17, wherein the amount of assistant added as a finely divided solid after the drying is from 0.1 to 30% by weight based on the amount of dry addition-polymer powder.

19. The process according to any of claims 1 to 18, wherein the weight-average diameter of the addition-polymer particles dispersed in the aqueous addition-polymer dispersion to be dried is from 250 to 2000 nm.

20. The process according to any of claims 1 to 18, wherein the weight-average diameter of the addition-polymer particles dispersed in the aqueous addition-polymer dispersion to be dried is from 250 to 1000 nm.

21. The process according to any of claims 1 to 20, wherein the aqueous addition-polymer dispersion is dried by spray drying.

22. The process according to claim 21, wherein the spray drying is carried out with an air inlet temperature $T_E$ of from 100 to 200°C and an air exit temperature $T_A$ of from 30 to 90°C.

23. The process according to claim 21 or 22, wherein a finely divided mineral antiblocking agent is metered in before, during and/or after the spray drying.

15

**24.** An addition-polymer powder obtainable by a process according to any of claims 1 to 23.

**25.** The use of an addition-polymer powder according to claim 24 for modifying a binding mineral building material.

**26.** A binding mineral building material comprising an addition-polymer powder according to claim 24.

**27.** A dry mortar comprising

- from 20 to 60% by weight of a mineral binder,
- from 0.1 to 20% by weight of an addition-polymer powder according to claim 24,
- up to 25% by weight of customary assistants, and
- a remainder comprising aggregates such as sand, fillers, pigments, natural fibers and/or synthetic fibers.

**Revendications**

**1.** Procédé de préparation de poudre de polymère convenant à la modification de matières de construction liantes au moyen d'un séchage d'une dispersion aqueuse de polymère, dont le film présente une température de transition vitreuse Tg < 30°C, après ajout d'un siccatif, **caractérisé en ce que** des siccatifs à action liquéfiante ne sont ajoutés à la dispersion aqueuse de polymère avant son séchage, en tant que siccatifs, que dans la matière de construction liante minérale rendue prête à l'emploi avec de l'eau et, à la suite du séchage, au moins encore un adjuvant à action solidifiante dans la matière de construction liante minérale rendue prête à l'emploi avec de l'eau est ajouté sous forme de solide finement divisé en le mélangeant à la poudre de polymère résultante après le séchage.

**2.** Procédé selon la revendication 1, **caractérisé en ce que** la matière de construction liante minérale, en tant que liant minéral, contient du ciment.

**3.** Procédé selon la revendication 2, **caractérisé en ce que** le siccatif à action liquéfiante dans la matière de construction liante minérale rendue prête à l'emploi avec de l'eau, est un polymère et/ou un oligomère qui comprend au moins un type des groupes fonctionnels suivants : groupe sulfonique, groupe sulfonate, groupe carboxyle et groupe carboxylate.

**4.** Procédé selon la revendication 3, **caractérisé en ce que** le polymère et/ou oligomère à action liquéfiante dans la matière de construction liante minérale rendue prête à l'emploi avec de l'eau est au moins un élément choisi dans le groupe formé par les condensats du formaldéhyde avec l'acide naphtalène-sulfonique, l'acide mélamine-sulfonique et/ou l'acide phénol-sulfonique, les sels de ces condensats, les sulfonates de lignine, les homoet copolymères de l'acide 2-acryl-amido-2-méthylpropane-sulfonique, de l'acide acrylique, de l'acide méthacrylique et/ou de l'acide maléique et les sels de ces homo- et copolymères.

**5.** Procédé selon l'une quelconque des revendications 2 à 4, **caractérisé en ce que** l'adjuvant à action solidifiante dans la matière de construction liante minérale rendue prête à l'emploi avec de l'eau, est un homo- ou copolymère contenant à l'état polymérisé de l'alcool vinylique ou de la N-vinylpyrrolidone, ou bien un polysiloxane organique et/ou un dérivé de la cellulose.

**6.** Procédé selon la revendication 5, **caractérisé en ce que** le homo- ou copolymère de l'alcool vinylique, à action solidifiante dans la matière de construction liante minérale rendue prête à l'emploi avec de l'eau, est un poly(acétate de vinyle) saponifié, dont le degré de saponification est de 70 à 100% en moles.

**7.** Procédé selon la revendication 6, **caractérisé en ce que** le poly(acétate de vinyle) saponifié contient, en moyenne en nombre, 100 à 5000 motifs monomères à l'état polymérisé.

**8.** Procédé selon la revendication 7, **caractérisé en ce que** le poly(acétate de vinyle) saponifié est ajouté sous forme de solide finement divisé, en le mélangeant à la poudre de polymère résultante après le séchage, et qu'il est constitué de façon à ce que 95% de son poids présente un diamètre de taille de grain maximal ≤ 250 μm.

**9.** Procédé selon l'une quelconque des revendications 1 à 8, **caractérisé en ce que** la température de transition vitreuse du film de la dispersion aqueuse de polymère à sécher est ≤ 20°C.

**10.** Procédé selon l'une quelconque des revendications 1 à 8, **caractérisé en ce que** la température de transition vitreuse du film de la dispersion aqueuse de polymère à sécher est ≤ 10°C.

**11.** Procédé selon l'une quelconque des revendications 1 à 8, **caractérisé en ce que** la température de transition vitreuse du film de la dispersion aqueuse de polymère à sécher est ≤ 0°C.

**12.** Procédé selon l'une quelconque des revendications 1 à 11, **caractérisé en ce que** le polymère dispersé de la dispersion aqueuse de polymère à sécher dans la forme polymérisée par voie radicalaire est constitué de 70 à 100% en poids d'esters de l'acide acrylique et/ou méthacrylique avec des alcanols comportant 1 à 12 atomes de C.

**13.** Procédé selon l'une quelconque des revendications 1 à 11, **caractérisé en ce que** le polymère dispersé de la dispersion aqueuse de polymère à sécher dans la forme polymérisée par voie radicalaire est constitué de 70 à 100% en poids de styrène et d'esters de l'acide acrylique et/ou méthacrylique avec des alcanols comportant 1 à 12 atomes de C.

**14.** Procédé selon l'une quelconque des revendications 1 à 11, **caractérisé en ce que** le polymère dispersé de la dispersion aqueuse de polymère à sécher dans la forme polymérisée par voie radicalaire est constitué de 70 à 100% en poids de butadiène ou bien de butadiène et de styrène.

**15.** Procédé selon l'une quelconque des revendications 1 à 11, **caractérisé en ce que** le polymère dispersé de la dispersion aqueuse de polymère à sécher dans la forme polymérisée par voie radicalaire est constitué de 40 à 100% en poids d'éthylène et au moins un des deux monomères, l'acétate de vinyle et le propionate de vinyle.

**16.** Procédé selon l'une quelconque des revendications 1 à 11, **caractérisé en ce que** le polymère dispersé de la dispersion aqueuse de polymère à sécher dans la forme polymérisée par voie radicalaire est constitué de

| 80 à 100% en poids | de monomères choisis dans le groupe formé par le styrène, l'α-méthylstyrène, les vinyltoluènes, les esters d'acides carboxyliques à insaturation mono-éthylénique en α, β comportant 3 à 6 atomes de C avec des alcanols comportant 1 à 12 atomes de C, le butadiène ainsi que les esters allyliques et vinyliques d'acides alcane-carboxyliques comportant 1 à 12 atomes de C, et |
| --- | --- |
| 0 à 20% en poids | d'autres monomères comportant au moins un groupe à insaturation éthylénique. |

**17.** Procédé selon l'une quelconque des revendications 1 à 16, **caractérisé en ce que** la quantité du siccatif ajouté avant le séchage est de 0,1 à 30% en poids, par rapport à la quantité du polymère dispersé.

**18.** Procédé selon l'une quelconque des revendications 1 à 17, **caractérisé en ce que** la quantité de l'adjuvant ajouté sous forme de solide finement divisé à la suite du séchage est de 0,1 à 30% en poids, par rapport à la quantité du polymère produit lors du séchage.

**19.** Procédé selon l'une quelconque des revendications 1 à 18, **caractérisé en ce que** le diamètre moyen en masse des particules de polymère distribuées de façon dispersée de la dispersion aqueuse de polymère à sécher est de 250 à 2 000 nm.

**20.** Procédé selon l'une quelconque des revendications 1 à 18, **caractérisé en ce que** le diamètre moyen en masse des particules de polymère distribuées de façon dispersée de la dispersion aqueuse de polymère à sécher est de 250 à 1 000 nm.

**21.** Procédé selon l'une quelconque des revendications 1 à 20, **caractérisé en ce que** le séchage de la dispersion aqueuse de polymère a lieu selon le procédé de séchage par pulvérisation.

**22.** Procédé selon la revendication 21, **caractérisé en ce que** le séchage par pulvérisation est réalisé à une température d'entrée $T_E$ du courant d'air chaud de 100 à 200°C et à une température de sortie $T_A$ du courant d'air chaud de 30 à 90°C.

**23.** Procédé selon la revendication 21 ou 22, **caractérisé en ce qu'**un agent anti-adhérent minéral finement divisé est ajouté en dosant avant, pendant et/ou après le processus de séchage par pulvérisation.

**24.** Poudre de polymère, pouvant être obtenue d'après un procédé selon l'une quelconque des revendications 1 à 23.

**25.** Utilisation de poudres de polymère selon la revendication 24 pour modifier des matières de construction liantes minérales.

**26.** Matières de construction liantes minérales, contenant de la poudre de polymère selon la revendication 24.

**27.** Préparation de mortier sec, constitué de

- 20 à 60% en poids de liant minéral,
- 0,1 à 20% en poids de poudre de polymère selon la revendication 24,
- jusqu'à 25% en poids d'adjuvants habituels, et
- en tant que quantité complémentaire, des additifs comme du sable, des charges, des pigments, des fibres naturelles et/ou des fibres synthétiques.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 4340510 A
- GB 1505558 A
- US 3196122 A
- US 3043790 A
- US 3239479 A
- DE 4317035 A
- DE 4317036 A
- DE 4320220 A
- EP 537411 A
- DE 1669903 B
- BE 8454499 A
- JP 54043285 A
- US 4225496 A
- DE 3220384 A
- DE 2837898 A
- US 3232899 A
- JP 3131533 A
- DE 4206429 A
- EP 262326 A
- EP 407889 A
- DE 2049114 A
- DE 2445813 A
- EP 78449 A
- DE 2238903 B
- EP 576844 A

- EP 62106 A
- EP 601518 A
- EP 680993 A
- EP 627450 A
- DE 3344242 A
- DE 19539460 A
- EP 671435 A
- EP 629650 A
- EP 467103 A
- DE 4406822 A
- EP 536597 A
- DE 493168 A
- DE 3342242 A
- DE 4118007 A
- DE 680993 A
- EP 477900 A
- EP 632096 A
- EP 627540 A
- DE 19540305 A
- EP 493168 A
- DE 4213965 A
- JP 7053728 A
- EP 698586 A
- EP 78449 B

### In der Beschreibung aufgeführte Nicht-Patentliteratur

- *TIZ-Fachberichte,* 1985, vol. 109 (9), 698
- **T.G. Fox.** *Bull. Am. Phys. Soc.,* 1956, vol. II (1), 123
- Ullmanns Encyklopädie der technischen Chemie. Verlag Chemie, 1980, 17, 18

- **J. Brandrup ; E.H. Immergut.** Polymer Handbook. J. Wiley, 1966
- Polymer Handbook. J. Wiley, 1975
- Polymer Handbook. J. Wiley, 1989
- Ullmann's Encyclopedia of Industrial Chemistry. VCH, 1992, vol. A21, 169